# FASCICULE DE BREVET EUROPEEN

(11) **EP 4 511 605 B1**
(45) Date de publication et mention de la délivrance du brevet: **05.08.2026**
(21) Numéro de dépôt: 23713392.1
(22) Date de dépôt: 24.03.2023
(51) Int. Cl.: F28D 9/00, F28D 21/00, B60K 11/02, F01M 5/00, B60H 1/00, B60K 11/04, B60H 1/32, B60K 1/00

(54) **MODULE DE GESTION DES FLUIDES POUR UN VEHICULE NOTAMMENT AUTOMOBILE**
FLUIDFÜHRUNGSEINRICHTUNG FÜR EIN FAHRZEUG, INSBESONDERE FÜR EIN KRAFTFAHRZEUG
FLUID GUIDING MODULE FOR A VEHICLE, IN PARTICULAR FOR AN AUTOMOBILE

(30) Priorité: 22.04.2022 FR 2203785
(43) Date de publication de la demande: 26.02.2025
(73) Titulaire: Valeo Electrification, 95892 Cergy Pontoise (FR)
(72) Inventeur: BLAETTE, Thomas, 96476 Bad Rodach (DE); FIENE, Andreas, 96476 Bad Rodach (DE); THOTA, Lohith Sriram Pavan, 600130 Chennai (IN)
(74) Mandataire: Valeo Powertrain Systems
(86) Numéro de dépôt international: PCT/EP2023/057741
(87) Numéro de publication internationale: WO 2023/202842

(56) Documents cités:
- EP-B1- 2 792 988
- WO-A1-2019/056114
- CA-A1- 2 993 872
- DE-A1- 102015 014 830
- US-A1- 2015 276 328
- US-A1- 2016 160 813
- US-B2- 10 900 557
- US-B2- 11 268 773

## Description

L'invention concerne un module de gestion des fluides pour un véhicule notamment automobile.

Les véhicules automobiles, en particulier les véhicules électriques, sont équipés de systèmes de gestion thermique tels que des circuits de refroidissement et/ou de chauffage afin d'assurer des fonctions de confort pour les utilisateurs de ce véhicule et un nécessaire contrôle de la température de composants du véhicule automobile, tels que, par exemple, les batteries. De tels circuits font couramment appel à une boucle de fluide réfrigérant et à une boucle de liquide caloporteur échangeant de la chaleur avec le fluide réfrigérant.

Les circuits de refroidissement et/ou de chauffage se composent notamment de composants de gestion thermique, tels que des pompes, des vannes, des échangeurs de chaleur, ainsi que des composants servant à la régulation de la température. Il est aussi prévu des composants, tels que des conduits, guidant un fluide et reliant fluidiquement les composants de gestion thermique entre eux. Le document DE 10 2015 014830 A1 décrit un module de gestion des fluides pour un véhicule selon le préambule de la revendication 1.

Le développement des véhicules électriques a accru le besoin en système de climatisation et/ou de pompe à chaleur optimisés avec des processus de fabrication simplifiés et économique tout en créant une demande pour des systèmes à encombrement réduit. L'invention vise à proposer une solution pour améliorer la situation.

A ce titre, elle propose un module de gestion des fluides pour un véhicule notamment automobile comportant :
- un support présentant une première face et une seconde face, la première face étant opposée à la seconde face, et,
- au moins un canal pour le circuit d'un fluide réfrigérant,
dans lequel la première face du support supporte au moins un premier échangeur de chaleur et la seconde face du support supporte au moins une vanne, caractérisé en ce que la première face du support supporte un deuxième échangeur de chaleur.

Ainsi, un tel support pour un module de gestion de fluides propose une disposition optimisée des composants équipant ce module. Cela entraine un encombrement réduit du module de gestion des fluides.

Le module de gestion des fluides selon l'invention peut en outre comprendre au moins une des caractéristiques suivantes, prises seules ou en combinaison :
- le support est formé d'au moins une première zone de circulation du fluide réfrigérant et destinée à la circulation du fluide réfrigérant à haute pression et d'une deuxième zone de circulation du fluide réfrigérant et destinée au moins à la circulation du fluide réfrigérant à haute pression et/ou à basse pression,
- le support est une unité de circulation de fluide réfrigérant,
- le support est formé de deux plaques assujetties l'une à l'autre,
- les canaux pour le circuit d'un fluide réfrigérant sont formés par au moins une déformation d'une des deux plaques,
- Le support intègre les canaux pour le circuit d'un fluide réfrigérant,
- le support comprend au moins une première plaque, appelée plaque de transfert, conformée pour former au moins un canal ou une ondulation pour la circulation du fluide,
- le support comprend au moins une deuxième plaque appelée plaque de support configurée pour assurer l'interface entre le support et des éléments assujettis sur le support,
- la plaque de support est plate pour être en contact avec une partie des éléments assujettis sur le support,
- la plaque plane de support définit en partie les conduits pour le fluide réfrigérant,
- le support est formé d'une plaque plane sur laquelle des conduits pour le fluide réfrigérant sont rapportés et assujettis,
- le support comporte au moins un premier canal destiné à la circulation du fluide réfrigérant à haute pression.
- un premier canal destiné à la circulation du fluide réfrigérant à haute pression, comporte une forme sensiblement en Y, avec une branche principale et deux ramifications dites première et deuxième ramifications,
- au moins un bloc support de vanne est inséré sur une ramification du premier canal destiné à la circulation du fluide réfrigérant à haute pression,
- deux blocs support de vanne sont chacun insérés sur une ramification du premier canal destiné à la circulation du fluide réfrigérant à haute pression,
- les blocs support de vanne sont aptes à recevoir chacun une vanne, en particulier une vanne d'arrêt,
- la branche principale du premier canal est destinée à assurer la communication entre une première bride , reliée fluidiquement à un compresseur, et les premières et deuxième ramifications ;
- la deuxième ramification est destinée à assurer la communication entre la branche principale et une deuxième bride, reliée fluidiquement à un condenseur interne,
- le support comporte aussi au moins un deuxième canal destiné à la circulation du fluide réfrigérant à haute pression,
- le support comporte quatre deuxième canaux destinés à la circulation du fluide réfrigérant à haute pression,
- un des deuxièmes canaux est destiné à assurer la communication entre une troisième bride, reliée fluidiquement à une bouteille et un autre échangeur de chaleur,
- un des deuxièmes canaux est destiné à assurer la communication entre un échangeur de chaleur et une quatrième bride, reliée fluidiquement à la bouteille,
- un des deuxièmes canaux est destiné à assurer la communication entre un échangeur de chaleur et une vanne, de préférence une vanne d'expansion,
- un des deuxièmes canaux est destiné à assurer la communication entre un échangeur de chaleur et une vanne, de préférence une vanne d'expansion,
- le support comporte aussi au moins un troisième canal destiné à la circulation du fluide réfrigérant à basse pression,
- le support comporte cinq troisième canaux destinés à la circulation du fluide réfrigérant à basse pression,
- un des troisièmes canaux, est destiné à assurer la communication entre une cinquième bride reliée fluidiquement à un évaporateur et un échangeur de chaleur,
- un des troisièmes canaux est destiné à assurer la communication entre un échangeur de chaleur et une sixième bride reliée fluidiquement au compresseur,
- un des troisièmes canaux est destiné à assurer la communication entre encore un autre échangeur de chaleur et un échangeur de chaleur,
- un des troisièmes canaux est destiné à assurer la communication entre une vanne d'expansion et un échangeur de chaleur,
- un des troisièmes canaux est destiné à assurer la communication entre une vanne d'expansion et une septième bride reliée fluidiquement à l'évaporateur,
- le au moins premier canal destiné à la circulation du fluide réfrigérant à haute pression est disposé sur la première zone de circulation du fluide réfrigérant et destinée à la circulation du fluide réfrigérant à haute pression, alors que le au moins troisième canal destiné à la circulation du fluide réfrigérant à basse pression est disposés sur une deuxième zone de circulation du fluide réfrigérant destinée à la circulation du fluide réfrigérant à basse pression,
- la première zone de circulation est distincte de la deuxième zone de circulation du fluide réfrigérant,
- la première zone de circulation peut être isolée thermiquement de la deuxième zone de circulation,
- la première zone de circulation du fluide réfrigérant s'étend sensiblement selon un premier plan et la deuxième zone de circulation du fluide réfrigérant s'étend sensiblement selon un deuxième plan et le premier plan de la première zone de circulation du fluide réfrigérant et le deuxième plan de la deuxième zone de circulation du fluide réfrigérant sont différents,
- le premier plan de la première zone de circulation du fluide réfrigérant et le deuxième plan de la deuxième zone de circulation du fluide réfrigérant sont des plans parallèles,
- la première zone de circulation du fluide réfrigérant et la deuxième zone de circulation du fluide réfrigérant sont reliées par un premier bord commun,
- le premier bord commun comporte des ouvertures,
- le support comporte une troisième zone apte à recevoir au moins en partie un compresseur, la troisième zone étant distincte de la première zone de circulation du fluide réfrigérant et de la deuxième zone de circulation du fluide réfrigérant,
- la troisième zone s'étend sensiblement selon un troisième plan, le troisième plan étant différent du premier plan de la première zone de circulation du fluide réfrigérant et du deuxième plan de la deuxième zone de circulation du fluide réfrigérant,
- le premier plan de la première zone de circulation du fluide réfrigérant, le deuxième plan de la deuxième zone de circulation du fluide réfrigérant et le troisième plan de la troisième zone sont des plans parallèles,
- la troisième zone et la deuxième zone de circulation du fluide réfrigérant et sont reliées par un deuxième bord commun
- le support comporte en outre une première ouverture apte à recevoir au moins en partie une vanne d'expansion,
- la première ouverture reçoit au moins en partie deux corps de deux vannes d'expansion distinctes l'une de l'autre.
- le support comporte une deuxième ouverture s'étendant au moins sur la troisième zone apte à recevoir au moins en partie un compresseur,
- la deuxième ouverture s'étend aussi sur le bord commun à la troisième zone et la deuxième zone de circulation du fluide réfrigérant,
- la première ouverture comporte une marche définissant un premier palier et un deuxième palier,
- la première ouverture est apte à recevoir au moins en partie une première et une deuxième vanne d'expansion,
- chacun des premier et deuxième palier est apte à recevoir une première ou une deuxième vanne d'expansion,
- le premier bord commun se prolonge le long de la première ouverture,
- le premier bloc d'insertion permet l'intégration des fonctions de répartition de fluide et de capteur de température au module de gestion de fluide.
- le premier bloc d'insertion permet une insertion de la première vanne d'expansion dans un sens parallèle au plan de la première zone de circulation du fluide réfrigérant.
- la vanne d'arrêt est assujettie au support via un bloc support de vanne commun à plusieurs vannes et/ou un bloc support individuel spécifique pour chaque vanne.
- la vanne d'arrêt est mise en communication fluidique avec le premier canal destiné à la circulation du fluide réfrigérant à haute pression via, de préférence, le bloc support de vannes.
- un capteur de température est prévu au niveau du premier canal destiné à la circulation du fluide réfrigérant à haute pression,
- le capteur de température est disposé sur une des deux ramifications du premier canal destiné à la circulation du fluide réfrigérant à haute pression
- un échangeur de chaleur de type condenseur à eau,
- la bouteille est une bouteille dessicante, configurée pour contenir le fluide réfrigérant à haute pression et capter l'humidité du fluide réfrigérant qui le traverse,
- un échangeur de chaleur interne, ledit échangeur de chaleur interne permettant de réaliser un transfert de calories entre une portion basse pression du circuit de fluide réfrigérant et une portion haute pression dudit circuit de fluide réfrigérant,
- des vannes d'expansion encore appelées détendeurs, peut être un détendeur électronique, ou EXV, un détendeur thermostatique, ou TXV, ou un orifice calibré,
- un échangeur de chaleur de type refroidisseur à eau,
- trois échangeurs de chaleur sont reliés fluidiquement aux premier, deuxième et troisième canaux par l'intermédiaire de brides,
- le module comporte en outre un première vanne d'expansion, le premier palier comportant un premier bloc d'insertion pour la première vanne d'expansion,
- le premier bloc d'insertion est usiné de manière à permettre l'insertion de la première vanne d'expansion dans un sens parallèle à un plan d'extension du support ,
- le premier bloc d'insertion soit aussi usiné de manière à accueillir un deuxième capteur de température,
- un axe d'extension longitudinale d'une vanne d'expansion est parallèle au plan de la première zone de circulation du fluide réfrigérant,
- le module comporte en outre une deuxième vanne d'expansion et le deuxième palier comporte un deuxième bloc d'insertion pour la deuxième vanne d'expansion,
- la deuxième vanne d'expansion est reliée à un échangeur de chaleur, préférentiellement un refroidisseur à eau, et disposé sur le support et en vis-à-vis de la deuxième vanne d'expansion,

- le deuxième bloc d'insertion permet l'insertion de la deuxième vanne d'expansion dans un sens parallèle à un plan d'extension du support,
- le deuxième bloc d'insertion est usiné de manière à permettre l'insertion de la deuxième vanne d'expansion dans un sens parallèle au plan de la première zone de circulation du fluide réfrigérant,
- l'axe d'extension longitudinale de la deuxième vanne d'expansion est parallèle au plan de la première zone de circulation du fluide réfrigérant,
- la première face du support supporte un troisième échangeur de chaleur,
- le deuxième échangeur de chaleur est disposé entre le premier échangeur de chaleur et le troisième échangeur de chaleur,
- le premier échangeur de chaleur est un échangeur interne et est disposé à distance du troisième échangeur de chaleur de type condenseur à eau
- le premier échangeur de chaleur, le deuxième échangeur de chaleur et le troisième échangeur de chaleur comportent chacun une longueur et une largeur, la longueur de chacun des premier échangeur de chaleur, deuxième échangeur de chaleur et troisième échangeur de chaleur définissant une direction d'extension longitudinale et les directions d'extension longitudinale du deuxième échangeur de chaleur et du troisième échangeur de chaleur sont parallèles et la direction d'extension longitudinal du premier échangeur de chaleur est perpendiculaire aux directions d'extension longitudinale du deuxième échangeur de chaleur et du troisième échangeur de chaleur,
- la première vanne d'expansion est disposée à proximité du deuxième échangeur de chaleur de type refroidisseur à eau,
- le premier échangeur de chaleur est disposé sur une première zone de circulation du fluide réfrigérant du support et destinée à la circulation du fluide réfrigérant à haute pression, et, le deuxième échangeur de chaleur et le troisième échangeur de chaleur sont disposés sur une deuxième zone de circulation du fluide réfrigérant du support et destinée à la circulation du fluide réfrigérant à haute pression et/ou à la circulation du fluide réfrigérant à basse pression,
- la deuxième face du support comporte en outre un compresseur,
- le compresseur est assujetti à la deuxième face du support par tout moyen tel que par exemple des vis.
- des dispositifs d'absorption des vibrations disposés entre le support et le compresseur,
- la deuxième face du support comporte en outre une bouteille,
- le compresseur et la bouteille comportent chacun une direction d'extension longitudinale respectivement et les directions d'extension longitudinale du compresseur est perpendiculaire à la direction d'extension longitudinale de la bouteille,
- le module comporte deux d'arrêt, de préférence disposées sur des blocs support de vannes,
- la deuxième face du support comporte au moins un capteur de température,
- un premier capteur de température est disposé à proximité d'au moins une vanne d'arrêt,
- un deuxième capteur de température est disposé à proximité de la première vanne d'expansion
- le deuxième capteur de température est inséré dans le premier bloc d'insertion pour la première vanne d'expansion,
- le premier bloc d'insertion pour la première vanne d'expansion intègre aussi la fonction capteur de température,
- la ou les vannes d'arrêt et le ou les capteurs de température présentent des directions d'extensions longitudinales parallèles et les directions d'extensions longitudinales des première et deuxièmes vannes d'arrêt ainsi que des premiers et deuxièmes capteurs de température sont perpendiculaires aux axes d'extension longitudinaux de la première vanne d'expansion et de la deuxième vanne d'expansion,
- au moins une vanne d'arrêt est disposée sur une première zone de circulation du fluide réfrigérant du support et destinée à la circulation du fluide réfrigérant à haute pression
- au moins un capteur de température est disposé sur une deuxième zone de circulation du fluide réfrigérant du support et destinée à la circulation du fluide réfrigérant à haute pression et/ou à la circulation du fluide réfrigérant à basse pression.

D'autres avantages et caractéristiques de la présente invention apparaîtront plus clairement à la lecture de la description suivante, donnée à titre illustratif et non limitatif, et des dessins annexés dans lesquels :

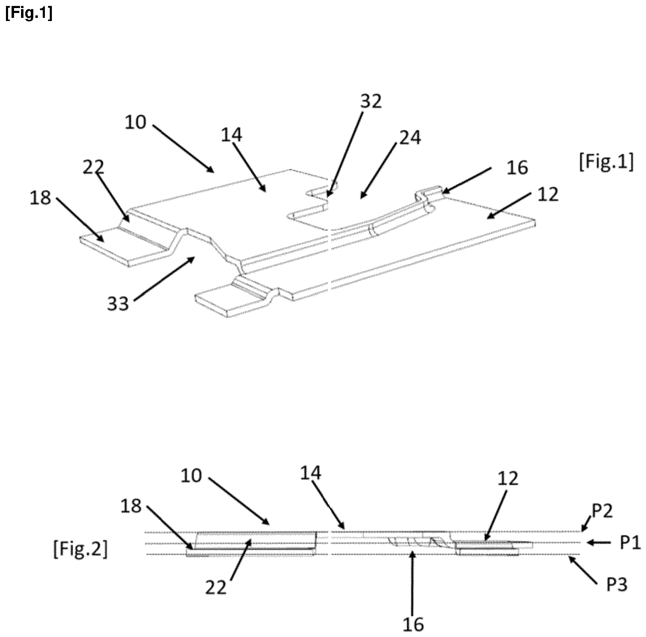

La figure 1 [Fig.1] est une vue en perspective simplifiée d'un support du module de gestion des fluides pour un véhicule selon l'invention, support sur lequel les canaux de circulation n'ont pas été représentés.
La figure 2 [Fig.2] est une vue de côté du support pour module de gestion des fluides de la figure 1 [Fig. 1].
La figure 3 [Fig.3] est une vue du dessus simplifiée d'une deuxième face du support du module de gestion des fluides selon l'invention ; la deuxième face présentant les canaux de circulation et une partie des éléments disposés sur cette deuxième face.
La figure 4 [Fig.4] est une vue en perspective simplifiée de la deuxième face du support du module de gestion des fluides selon l'invention ; la deuxième face présentant les canaux de circulation et une partie des éléments disposés sur cette deuxième face.
La figure 5 [Fig.5] est une vue de dessus simplifiée d'une partie de la deuxième face du support du module de gestion des fluides selon l'invention ; en particulier une première zone de circulation du fluide réfrigérant et destinée à la circulation du fluide réfrigérant à haute pression, cette première zone présentant les canaux de circulation et une partie des éléments disposés sur cette première zone.
La figure 6 [Fig. 6] est une vue de dessous d'une première face du support du module de gestion des fluides selon l'invention.
La figure 7 [Fig. 7] est une vue de dessus de la deuxième face du support du module de gestion des fluides selon l'invention.
La figure 8 [Fig. 8] est une vue de côté simplifiée de la deuxième face du support du module de gestion des fluides selon l'invention, la deuxième face présentant les canaux de circulation et une partie des éléments disposés sur cette deuxième face.

Un module de gestion des fluides pour un véhicule, notamment un véhicule automobile comporte un support 10 comportant au moins deux canaux 60 et 64 pour le circuit d'un fluide réfrigérant.

Ici, le support 10 est formé d'au moins une première zone de circulation 12 du fluide réfrigérant et destinée à la circulation du fluide réfrigérant à haute pression et d'une deuxième zone de circulation 14 du fluide réfrigérant et destinée au moins à la circulation du fluide réfrigérant à basse pression.

Le fluide réfrigérant utilisé par le circuit de fluide réfrigérant est ici un fluide chimique tel que le R1234yf. D'autres fluides réfrigérants pourraient être employés, comme par exemple le R134a, ou encore le R290.

On entend par « fluide réfrigérant à haute pression » un fluide réfrigérant à une pression aux alentours de 20 bars, par « fluide réfrigérant à basse pression » à une pression de 3 bars.

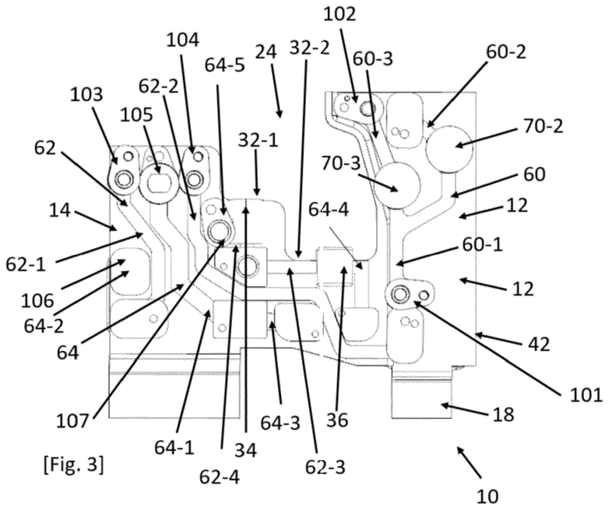

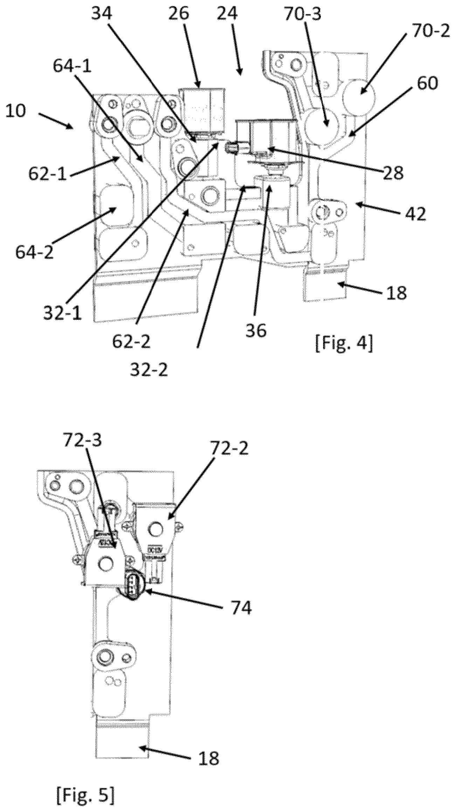

Dans le mode de réalisation particulier illustré notamment aux figures 3 et 4, le support 10 est formé d'au moins une première zone de circulation 12 du fluide réfrigérant et destinée à la circulation du fluide réfrigérant à haute pression et d'une deuxième zone de circulation 14 du fluide réfrigérant et destinée au moins à la circulation du fluide réfrigérant à haute pression et/ou à basse pression.

Ce support 10 est également appelé plateforme centrale (ou « hub » dans sa dénomination anglaise). Le support 10 est destiné à faire partie d'un système de gestion thermique d'un véhicule automobile dans lequel le fluide réfrigérant circule, en particulier dans un circuit de climatisation et/ou de pompe à chaleur.

Autrement dit, le support 10 est une unité de circulation de fluide réfrigérant.

Selon un mode de réalisation, le support 10 est formé de deux plaques assujetties l'une à l'autre. Dans un tel cas, les canaux pour le circuit d'un fluide réfrigérant sont formés par au moins une déformation d'une des deux plaques.

Dit autrement, et dans ce mode de réalisation particulier, le support 10 intègre les canaux pour le circuit d'un fluide réfrigérant.

Selon ce mode de réalisation, les plaques formant le support 10 comportent chacune une ou plusieurs régions planes entre les canaux 60, 64.

Selon ce mode de réalisation de nouveau, l'épaisseur des plaques formant le support est sensiblement uniforme tant au niveau des régions planes qu'au niveau des canaux 60, 64.

Un mode de réalisation particulier et non illustré propose que le support 10 comprenne au moins une première plaque, appelée plaque de transfert, conformée pour former au moins un canal ou une ondulation pour la circulation du fluide. En d'autres termes, les courbures de la plaque de transfert constituent des passages qui forment les canaux.

Toujours dans ce mode de réalisation particulier et non illustré, le support 10 comprend au moins une deuxième plaque appelée plaque de support. La plaque de support est configurée pour assurer l'interface entre le support 10 et des éléments assujettis sur le support 10.

La plaque de support pourra être plate pour être en contact avec une partie des éléments assujettis sur le support 10.

Dit autrement, dans ce mode de réalisation, la plaque plane de support définit en partie les conduits pour le fluide réfrigérant.

Selon un autre mode de réalisation, le support 10 est formé d'une plaque plane sur laquelle des conduits pour le fluide réfrigérant sont rapportés et assujettis.

Dans le mode de réalisation illustré à la figure 3, le support 10 comporte au moins un premier canal 60 destiné à la circulation du fluide réfrigérant à haute pression.

Le premier canal 60, destiné à la circulation du fluide réfrigérant à haute pression, comporte dans le mode de réalisation illustré ici une forme sensiblement en Y, avec une branche principale 60-1 et deux ramifications dites première (60-2) et deuxième (60-3) ramifications.

Dans un mode de réalisation particulier, au moins un bloc support de vanne est inséré sur une ramification du premier canal 60 destiné à la circulation du fluide réfrigérant à haute pression.

Dans le mode de réalisation particulier illustré aux figures 3 et 4, deux blocs support de vanne 70-2 et 70-3 sont chacun insérés sur une ramification 60-2 ou 60-3 du premier canal 60 destiné à la circulation du fluide réfrigérant à haute pression.

Ici, les blocs support de vanne 70-2 et 70-3 sont aptes à recevoir chacun une vanne, en particuliers une vanne d'arrêt 72-2 ou 72-3 visibles à la figure 5.

Des variantes de réalisations non représentées proposent que le support 10 comporte des vannes telles que des vannes progressives, EXV (pour « electronic expansion valve » en anglais) ou TXV (pour « thermostatic expansion valve » en anglais). Ces vannes seront de préférence assujetties au support 10 via un bloc support de vanne commun à plusieurs vannes et/ou un bloc support individuel spécifique pour chaque vanne.

Ainsi, le support 10 comprend au moins un bloc support de vanne 70-2 ou 70-3 qui peut être vu comme un bloc de distribution du fluide réfrigérant dans le support 10.

Dit autrement, une vanne d'arrêt 72-2 ou 72-3 est mise en communication fluidique avec le premier canal 60 destiné à la circulation du fluide réfrigérant à haute pression via, dans ce mode de réalisation particulier, le bloc support de vannes 70-2 ou 70-3.

Plus particulièrement, ici, la mise en communication fluidique s'effectue au niveau de chaque ramification respective 60-2 ou 60-3 du premier canal 60 destiné à la circulation du fluide réfrigérant à haute pression.

Un capteur de température 74 (visible par exemple à la figure 5) est prévu au niveau du premier canal 60 destiné à la circulation du fluide réfrigérant à haute pression.

Dans le mode de réalisation illustré ici, le capteur de température 74 est disposé sur une des deux ramifications du premier canal 60 destiné à la circulation du fluide réfrigérant à haute pression (ici la deuxième ramification 60-2).

Plus particulièrement, le capteur de température 74 est disposé à proximité de l'embranchement entre la branche principale 60-1 et les deux ramifications 60-2 et 60-3 du premier canal 60 destiné à la circulation du fluide réfrigérant à haute pression.

Comme indiqué plus haut, le premier canal 60 est destiné à la circulation du fluide réfrigérant à haute pression.

Dans ce mode de réalisation, la branche principale 60-1 du premier canal 60 est destinée à assurer la communication entre une première bride 101, reliée fluidiquement à un compresseur 20, et les premières (60-2) et deuxième (60-3) ramifications.

La première ramification 60-2 est destinée à assurer la communication entre la branche principale 60-1 et un échangeur de chaleur, ci-après dénommé troisième échangeur de chaleur.

Selon ce mode de réalisation, le troisième échangeur de chaleur 52 est de type condenseur à eau. Cet échangeur est configuré pour opérer un échange de calories entre le fluide réfrigérant à haute pression et un liquide caloporteur.

La deuxième ramification 60-3 est destinée à assurer la communication entre la branche principale 60-1 et une deuxième bride 102, reliée fluidiquement à un condenseur interne, ici non représenté. Ce condenseur interne est un dispositif de régulation thermique de l'habitacle du véhicule, disposé par exemple dans l'habitacle dudit véhicule. Ledit condenseur interne est destiné à réchauffer un flux d'air le traversant.

Le support 10 comporte aussi au moins un deuxième canal 62 destiné à la circulation du fluide réfrigérant à haute pression.

Dans le mode de réalisation particulier illustré à la figure 3, le support 10 comporte quatre deuxième canaux 62-1, 62-2, 62-3, 62-4 destinés à la circulation du fluide réfrigérant à haute pression.

Dans ce même mode de réalisation, un des deuxièmes canaux, ci-après référencé 62-1, est destiné à assurer la communication entre une troisième bride 103, reliée fluidiquement à une bouteille 56 et un autre échangeur de chaleur, ci-après dénommé premier échangeur de chaleur 54.

Selon ce mode de réalisation, la bouteille 56 est une bouteille dessicante, configurée pour contenir le fluide réfrigérant à haute pression et capter l'humidité du fluide réfrigérant qui le traverse.

Selon un autre mode de réalisation, non représenté, la bouteille 56 peut être un accumulateur. Selon cet autre mode de réalisation, la bouteille 56, ou accumulateur, serait placé sur une portion basse pression du circuit.

Selon le mode de réalisation illustré à la figure 3, le premier échangeur de chaleur 54 est un échangeur de chaleur interne, ledit échangeur de chaleur interne permettant de réaliser un transfert de calories entre une portion basse pression du circuit de fluide réfrigérant et une portion haute pression dudit circuit de fluide réfrigérant. Un tel échange de calories permet d'optimiser les propriétés thermodynamiques du circuit de fluide réfrigérant.

Dans ce même mode de réalisation, un des deuxièmes canaux, ci-après référencé 62-2 est destiné à assurer la communication entre le troisième échangeur de chaleur 52 et une quatrième bride 104, reliée fluidiquement à la bouteille 56.

Toujours dans ce même mode de réalisation illustré ici, un des deuxièmes canaux, ci-après référencé 62-3, est destiné à assurer la communication entre le premier échangeur de chaleur 54 et une vanne, de préférence une vanne d'expansion. Dans la suite de la description, cette vanne d'expansion sera dénommée deuxième vanne d'expansion 28.

Toujours dans ce même mode de réalisation illustré ici, un des deuxièmes canaux ci-après référencé 62-4 est destiné à assurer la communication entre le premier échangeur de chaleur 54 et une autre vanne, de préférence une vanne d'expansion. Dans la suite de la description, cette vanne d'expansion sera dénommée première vanne d'expansion 26.

Chacune des vannes d'expansion 26, 28, encore appelées détendeurs, peut être un détendeur électronique, ou EXV, un détendeur thermostatique, ou TXV, ou un orifice calibré. Dans le cas d'un détendeur électronique, la section de passage permettant de faire passer le fluide réfrigérant peut-être ajustée de manière continue entre une position de fermeture et une position d'ouverture maximale. Pour cela, un contrôleur électronique pilote un moteur électrique qui déplace un obturateur mobile contrôlant la section de passage offerte au fluide réfrigérant.

Le support 10 comporte aussi au moins un troisième canal 64, destiné à la circulation du fluide réfrigérant à basse pression.

Dans le mode de réalisation particulier illustré à la figure 3, le support 10 comporte cinq troisième canaux 64-1, 64-2, 64-3, 64-4 et 64-5 destinés à la circulation du fluide réfrigérant à basse pression.

Dans ce même mode de réalisation, un des troisièmes canaux, ci-après référencé 64-1 est destiné à assurer la communication entre une cinquième bride 105, reliée fluidiquement à un évaporateur, non représenté, et au premier échangeur de chaleur 54. Cet évaporateur est un dispositif de régulation thermique de l'habitacle du véhicule, disposé par exemple dans l'habitacle dudit véhicule. Ledit évaporateur est destiné à refroidir un flux d'air le traversant.

Toujours dans ce même mode de réalisation illustré ici, un des troisièmes canaux, ci-après référencé 64-2, est destiné à assurer la communication entre le premier échangeur de chaleur 54 et une sixième bride 106, reliée fluidiquement au compresseur 20.

Dans ce même mode de réalisation, un des troisièmes canaux, ci-après référencé 64-3, est destiné à assurer la communication entre encore un autre échangeur de chaleur (ci-après dénommé deuxième échangeur de chaleur 50) et le premier échangeur de chaleur 54.

Selon ce mode de réalisation, le deuxième échangeur de chaleur 50 est de type refroidisseur à eau (ou « chiller » dans sa dénomination anglaise). Cet échangeur est configuré pour opérer un échange de calories entre le fluide réfrigérant à basse pression et un liquide caloporteur.

Toujours dans ce même mode de réalisation, un des troisièmes canaux, ci-après référencé 64-4, est destiné à assurer la communication entre la deuxième vanne d'expansion 28 et le deuxième échangeur de chaleur 50.

Dans ce même mode de réalisation, un des troisièmes canaux, ci-après référencé 64-5 est destiné à assurer la communication entre la première vanne d'expansion 26 et la septième bride 107, reliée fluidiquement à l'évaporateur.

Les deux vannes d'expansion 26, 28 permettent de contrôler l'alimentation en fluide réfrigérant de l'évaporateur et du deuxième échangeur de chaleur 50. Ainsi, en fonction de la position des vannes d'expansion, 26, 28 l'évaporateur et/ou le deuxième échangeur de chaleur 50 peut être alimenté en fluide réfrigérant.

Selon un mode de réalisation, les premier (54), deuxième (50) et troisième (52) échangeurs de chaleur sont reliés fluidiquement aux premier, deuxième et troisième canaux 60, 62, 64, par l'intermédiaire de brides. Plus précisément, le premier échangeur de chaleur 54 est reliés au moyen d'une huitième, neuvième, dixième et onzième brides, respectivement au deuxième canal 62-1, aux deuxièmes canaux 62-3 et 62-4, au troisième canal 64-2 et aux troisièmes canaux 64-1 et 64-3, le deuxième échangeur de chaleur 50 est relié au moyen d'une douzième et treizième brides, respectivement au troisième canal 64-3 et au troisième canal 64-4, le troisième échangeur de chaleur 52 est relié au moyen d'une quatorzième bride et d'une quinzième bride respectivement à la première ramification 60-2 du premier canal 60 et au deuxième canal 62-2.

Dans le mode de réalisation illustré notamment aux figures 3 et suivantes, le au moins premier canal 60 destiné à la circulation du fluide réfrigérant à haute pression est disposé sur la première zone de circulation 12 du fluide réfrigérant et destinée à la circulation du fluide réfrigérant à haute pression, alors que led au moins troisième canal 64 destiné à la circulation du fluide réfrigérant à basse pression est disposés sur une deuxième zone de circulation 14 du fluide réfrigérant destinée à la circulation du fluide réfrigérant à basse pression.

Dans l'exemple particulier illustré ici, la première zone de circulation 12 est distincte de la deuxième zone de circulation 14 du fluide réfrigérant.

La première zone de circulation 12 peut être isolée thermiquement de la deuxième zone de circulation 14.

La première zone de circulation 12 du fluide réfrigérant s'étend sensiblement selon un premier plan P1 et la deuxième zone de circulation 14 du fluide réfrigérant s'étend sensiblement selon un deuxième plan P2.

Le premier plan P1 de la première zone de circulation 12 du fluide réfrigérant et le deuxième plan P2 de la deuxième zone de circulation 14 du fluide réfrigérant sont différents.

Dans ce mode de réalisation, le premier plan P1 de la première zone de circulation 12 du fluide réfrigérant et le deuxième plan P2 de la deuxième zone de circulation 14 du fluide réfrigérant sont des plans parallèles.

La première zone de circulation 12 du fluide réfrigérant et la deuxième zone de circulation 14 du fluide réfrigérant sont reliées par un premier bord commun 16.

Dans un mode de réalisation non représenté, le premier bord commun 16 comporte des ouvertures.

Selon l'invention, le support 10 comporte en outre une première ouverture 24 apte à recevoir au moins en partie une vanne d'expansion 26.

Dans le mode de réalisation représenté ici, la première ouverture 24 reçoit au moins en partie deux corps de deux vannes d'expansion 26 et 28 distinctes l'une de l'autre.

La première vanne d'expansion 26 est reliée à l'évaporateur (non représenté) et disposé à un autre endroit du véhicule automobile, et en particulier dans un boitier de climatisation.

La deuxième vanne d'expansion 28 est reliée à un deuxième échangeur 50, préférentiellement de type refroidisseur à eau, et disposé sur une face du support 10 et en vis-à-vis de la deuxième vanne d'expansion 28.

Dans le mode de réalisation représenté ici, le premier bord commun 16 se prolonge le long de la première ouverture 24. Ce prolongement assure notamment une fonction de renfort mécanique du support 10.

Le support 10 comporte une deuxième ouverture 33 s'étendant au moins sur la troisième zone 18 apte à recevoir au moins en partie le compresseur 20.

Cette deuxième ouverture 22 peut être vue comme une découpe permettant d'alléger le support 10 et permettant de définir deux pattes de fixation pour le compresseur 20.

La deuxième ouverture 33 s'étend aussi sur le bord commun 22 à la troisième zone 18 et la deuxième zone de circulation 14 du fluide réfrigérant.

Autrement dit, cette première ouverture 24 permet de loger au moins en partie le corps de la vanne d'expansion 26.

Dans un mode de réalisation particulier, la vanne d'expansion 26 est une vanne d'expansion contrôlée de manière électronique.

La première vanne d'expansion 26 est reliée à un évaporateur (non représenté) et disposée à un autre endroit du véhicule automobile et en particulier dans un boitier de climatisation.

La première ouverture 24 comporte une marche 32 définissant un premier palier 32-1 et un deuxième palier 32-2.

La première ouverture 24 est apte à recevoir au moins en partie une première 26 et une deuxième 28 vanne d'expansion.

Chacun des premier et deuxième palier 32-1 et 32-2 est apte à recevoir une première ou une deuxième vanne d'expansion 26 et 28.

Le premier palier 32-1 comportant un premier bloc d'insertion 34 pour la première vanne d'expansion 26.

Ici, le premier bloc d'insertion 34 est usiné de manière à permettre l'insertion de la première vanne d'expansion 26 dans un sens parallèle à un plan d'extension du support 10. Ceci permet un gain de place, rendant ainsi le module plus compact.

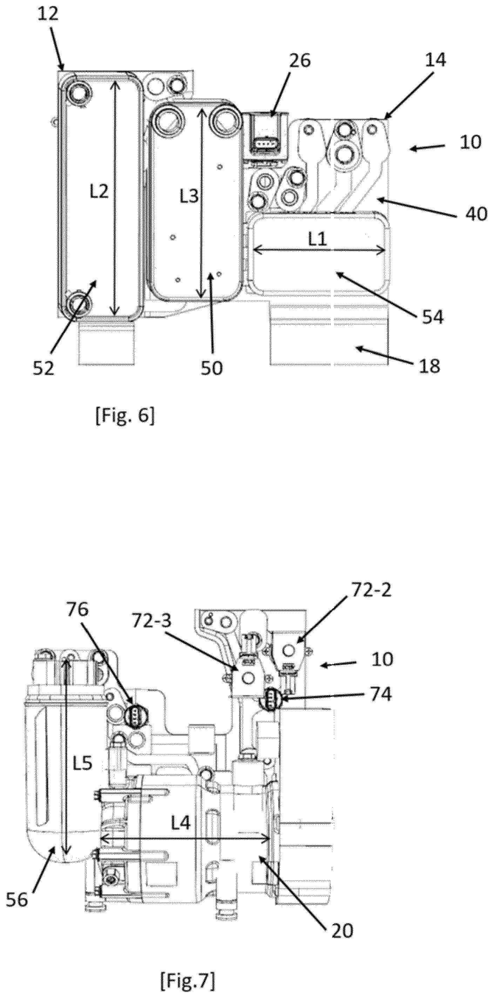

Un mode de réalisation illustré à la figure 7 propose que le premier bloc d'insertion 34 soit aussi usiné de manière à accueillir un deuxième capteur de température 76.

Autrement dit, le premier bloc d'insertion 34 permet l'intégration des fonctions de répartition de fluide (via la vanne, ici d'expansion) et de capteur de température au module de gestion de fluide.

Dans le mode de réalisation illustré ici, le premier bloc d'insertion 34 permet une insertion de la première vanne d'expansion 26 dans un sens parallèle au plan P1 de la première zone de circulation 12 du fluide réfrigérant.

Dans ce mode de réalisation particulier, la première vanne d'expansion 26 comporte un axe d'extension longitudinale. L'axe d'extension longitudinale de la première vanne d'expansion 26 est parallèle plan P1 de la première zone de circulation 12 du fluide réfrigérant.

Le deuxième palier 32-2 comporte un deuxième bloc d'insertion 36 pour la deuxième vanne d'expansion 28.

La deuxième vanne d'expansion 28 est reliée à un deuxième échangeur de chaleur 50, préférentiellement un échangeur de chaleur de type refroidisseur à eau, et disposé sur le support 10 et en vis-à-vis de la deuxième vanne d'expansion 28.

Autrement dit, cette première ouverture 24 permet de loger au moins en partie le corps de la deuxième vanne d'expansion 28.

Dans le mode de réalisation illustré ici, la première ouverture 24 permet de loger deux vannes d'expansion 26 et 28.

Dans un mode de réalisation particulier, la deuxième vanne d'expansion 28 est une vanne d'expansion contrôlée de manière électronique.

Ici, le deuxième bloc d'insertion 36 permet l'insertion de la deuxième vanne d'expansion 28 dans un sens parallèle à un plan d'extension du support 10. Ceci permet un gain de place, rendant ainsi le module plus compact.

Dans le mode de réalisation illustré ici, le deuxième bloc d'insertion 36 est usiné de manière à permettre l'insertion de la deuxième vanne d'expansion 28 dans un sens parallèle au plan P1 de la première zone de circulation 12 du fluide réfrigérant.

Dans ce mode de réalisation particulier, la deuxième vanne d'expansion 28 comporte un axe d'extension longitudinale. L'axe d'extension longitudinale de la deuxième vanne d'expansion 28 est parallèle au plan P1 de la première zone de circulation 12 du fluide réfrigérant.

Le support 10 comporte une troisième zone 18 apte à recevoir au moins en partie un compresseur 20, la troisième zone 18 étant distincte de la première zone de circulation 12 du fluide réfrigérant et de la deuxième zone de circulation 14 du fluide réfrigérant.

La troisième zone 18 s'étend sensiblement selon un troisième plan P3, le troisième plan P3 étant différent du premier plan P1 de la première zone de circulation 12 du fluide réfrigérant et du deuxième plan P2 de la deuxième zone de circulation 14 du fluide réfrigérant.

Dans ce mode de réalisation, le premier plan P1 de la première zone de circulation 12 du fluide réfrigérant, le deuxième plan P2 de la deuxième zone de circulation 14 du fluide réfrigérant et le troisième plan P3 de la troisième zone 18 sont des plans parallèles.

La troisième zone 18 et la deuxième zone de circulation 14 du fluide réfrigérant et sont reliées par un deuxième bord commun 22.

Selon l'invention, le module de gestion des fluides pour un véhicule notamment automobile comporte :
- le support 10 présentant une première face 40 et une seconde face 42, la première face 40 étant opposée à la seconde face 42, et,
- au moins un canal 60, 62 et 64 pour le circuit d'un fluide réfrigérant
- la première face 40 du support 10 supporte au moins un premier échangeur de chaleur 54 et la seconde face 42 du support 10 supporte au moins une vanne 72-2 ou 72-3.

Une telle configuration permet un gain de place en disposant différents éléments du module de gestion des fluides sur les deux faces du support 10 de manière optimisée.

Dans le mode de réalisation illustré ici, le premier échangeur de chaleur 54 est un échangeur dénommé échangeur interne (ou « IHX » pour « Internal Heat Exchanger » dans sa dénomination anglaise). Le premier échangeur de chaleur 54 de type échangeur interne permet un échange thermique entre le fluide réfrigérant circulant à haute pression et le fluide réfrigérant circulant à basse pression.

La première face 40 du support 10 supporte un deuxième échangeur de chaleur 50.

Dans le mode de réalisation illustré ici, le deuxième échangeur de chaleur 50 est un échangeur de type refroidisseur à eau. Le deuxième échangeur de chaleur 50 de type refroidisseur à eau permet un échange thermique entre le fluide réfrigérant et un liquide caloporteur, en particulier, ici, de l'eau glycolée.

La première face 40 du support 10 supporte un troisième échangeur de chaleur 52.

Dans le mode de réalisation illustré ici, le troisième échangeur de chaleur 52 est un échangeur de type condenseur à eau (ou « WCDS » pour « Water Condenser » dans sa dénomination anglaise). Le troisième échangeur de chaleur 52 de type condenseur à eau permet, lui aussi, un échange thermique entre le fluide réfrigérant et un liquide caloporteur, en particulier, ici, de l'eau glycolée.

Le deuxième échangeur 50 de chaleur est disposé entre le premier échangeur de chaleur 54 et le troisième échangeur de chaleur 52.

Ceci a pour effet technique d'améliorer l'efficacité de l'échange thermique à travers le module en participant à la création d'un gradient thermique. En effet, le troisième échangeur de chaleur 52 de type condenseur à eau voit circuler un fluide réfrigérant plus chaud que celui circulant dans le deuxième échangeur de chaleur 50 de type refroidisseur à eau.

Le premier échangeur de chaleur 54 de type échangeur interne est disposé à distance du troisième échangeur de chaleur 52 de type condenseur à eau de manière à ce que dernier ne transmette pas de chaleur au premier échangeur de chaleur 54 de type échangeur interne.

Plus précisément, une lame d'air sépare le premier échangeur de chaleur 54 du troisième échangeur de chaleur 52, cette lame d'aire ayant pour effet de les isoler thermiquement l'un par rapport à l'autre.

Le premier échangeur de chaleur 54, le deuxième échangeur de chaleur 50 et le troisième échangeur de chaleur 52 comportent chacun une longueur et une largeur, la longueur de chacun des premier échangeur de chaleur 54, deuxième échangeur de chaleur 50 et troisième échangeur de chaleur 52 définissant une direction d'extension longitudinale respectivement L1, L2 et L3. Les directions d'extension longitudinale L2 et L3 du deuxième échangeur de chaleur 50 et du troisième échangeur de chaleur 52 sont parallèles. La direction d'extension longitudinal L1 du premier échangeur de chaleur 54 est perpendiculaire aux directions d'extension longitudinale L2 et L3 du deuxième échangeur de chaleur 50 et du troisième échangeur de chaleur 52.

Une telle distribution contribue elle aussi à améliorer l'efficacité de l'échange thermique à travers le module en participant à la création d'un gradient thermique.

Dans le mode de réalisation illustré ici, le premier échangeur de chaleur 54 comprend une encoche, ou découpe, s'étendant du côté du support 10, perpendiculairement à la direction d'extension longitudinale L1 dudit premier échangeur de chaleur 54. Cette découpe a pour effet de créer un espace permettant le passage d'au moins l'un des canaux 60, 62, 64 du module de gestion des fluides.

Dans le mode de réalisation illustré ici, on notera que la première vanne d'expansion 26 est disposée à proximité du deuxième échangeur de chaleur 50 de type refroidisseur à eau.

Comme indiqué plus haut, la première vanne d'expansion 26 comporte un axe d'extension longitudinal. L'axe d'extension longitudinale de la première vanne d'expansion 26 est parallèle au plan P1 de la première zone de circulation 12 du fluide réfrigérant.

De plus, ici, l'axe d'extension longitudinale de la première vanne d'expansion 26 est parallèle aux directions d'extension longitudinale L2 et L3 du deuxième échangeur de chaleur 50 et du troisième échangeur de chaleur 52.

Cet arrangement conduit lui-aussi à améliorer la compacité du module de gestion des fluides.

Le premier échangeur de chaleur 54 est disposé sur une première zone de circulation 12 du fluide réfrigérant du support 10 et destinée à la circulation du fluide réfrigérant à haute pression.

Le deuxième échangeur de chaleur 50 et le troisième échangeur de chaleur 52 sont disposés sur une deuxième zone de circulation 14 du fluide réfrigérant du support 10 et destinée à la circulation du fluide réfrigérant à haute pression et/ou à la circulation du fluide réfrigérant à basse pression.

La deuxième face 42 du support 10 comporte en outre un compresseur 20.

Dans ce mode de réalisation, le compresseur 20 est assujetti à la deuxième face 42 du support 10 par tout moyen tel que par exemple des vis.

Il est aussi possible de prévoir des dispositifs d'absorption des vibrations disposés entre le support 10 et le compresseur 20.

De tels dispositifs d'absorption, ou autres élément de découplage mécanique, pourraient également être interposés entre le support 10 et la structure du véhicule.

La deuxième face 42 du support 10 comporte en outre une bouteille 56.

Autrement dit, dans ce mode de réalisation, la bouteille 56 est assujettie à la deuxième face 42 du support 10.

La bouteille 56 est une bouteille dessicante, avec pour fonction de séparer le fluide réfrigérant liquide et le fluide réfrigérant gazeux, à haute pression, de permettre un stockage et de capter l'humidité du fluide réfrigérant qui le traverse.

Selon un autre mode de réalisation, la bouteille 56 pourrait être un accumulateur. Selon cet autre mode de réalisation, la bouteille 56, ou accumulateur, serait placé sur une portion basse pression du circuit.

La bouteille 56 pourrait être munie d'une vanne de charge de fluide réfrigérant.

Le compresseur 20 et la bouteille 56 comportent chacun une direction d'extension longitudinale respectivement L4 et L5. Les directions d'extension longitudinale L4 du compresseur est perpendiculaire à la direction d'extension longitudinale L5 de la bouteille 56.

Les direction d'extension longitudinales L4 et L5, respectivement du compresseur 20 et de la bouteille 56, s'étendent parallèlement aux premier, deuxième et troisième plans P1, P2 et P3.

Ces dispositions du compresseur 20 et de la bouteille 56 permettent d'améliorer la compacité du module de gestion des fluides.

La deuxième face 42 du support 10 comporte au moins une vanne 73-2 ou 72-3.

Dans le mode de réalisation illustré à la figure 7, il est prévu deux vannes, ici vannes d'arrêt 72-1 et 72-2. En particulier, ces vannes d'arrêt 72-2 et 72-3 sont prévues disposées sur des blocs support de vannes 70-2 et 70-3 (non visibles à la figure 7).

La deuxième face 42 du support 10 comporte au moins un capteur de température 74 ou 76.

Dans le mode de réalisation illustré à la figure 7, un premier capteur de température 74 est disposé à proximité d'au moins une vanne ici d'arrêt 72-2 ou 72-4.

A titre d'exemple de réalisation, il est possible de prévoir un deuxième capteur de température 76 disposé ici à proximité de la première vanne d'expansion 26.

Plus particulièrement, le deuxième capteur de température 76 est inséré dans le premier bloc d'insertion 34 pour la première vanne d'expansion 26.

Dit autrement, le premier bloc d'insertion 34 pour la première vanne d'expansion 26 intègre aussi la fonction capteur de température. Pour se faire, un mode de réalisation particulier propose que le premier bloc d'insertion 34 pour la première vanne d'expansion 26 soit usiné de manière à recevoir le deuxième capteur de température 76.

Les première et deuxièmes vannes d'arrêt 72-2 et 72-3 ainsi que les premiers et deuxièmes capteurs de température 74 et 76 comportent tous une direction d'extension longitudinale.

La vanne d'arrêt 72-2 ou 72-3 et le capteur de température 74 ou 76 présentes des directions d'extensions longitudinales parallèles.

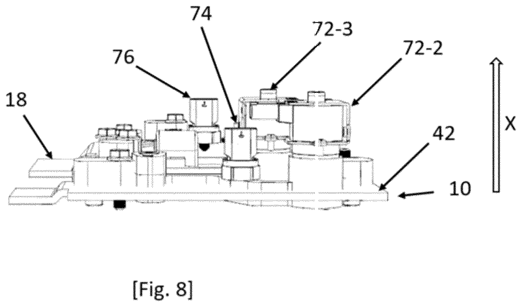

Dans ce mode de réalisation notamment illustré à la figure 8, les directions d'extensions longitudinales des première et deuxièmes vannes d'arrêt 72-2 et 72-3 ainsi que les premiers et deuxièmes capteurs de température 74 et 76 sont, toutes parallèles entre elles et parallèle à la direction X.

On notera que dans ce mode de réalisation particulier, les directions d'extensions longitudinales des première et deuxièmes vannes d'arrêt 72-2 et 72-3 ainsi que des premiers et deuxièmes capteurs de température 74 et 76 sont perpendiculaires aux axes d'extension longitudinaux de la première vanne d'expansion 26 et de la deuxième vanne d'expansion 28.

Au moins une vanne d'arrêt 72-2 ou 72-3 est disposée sur une première zone de circulation 12 du fluide réfrigérant du support 10 et destinée à la circulation du fluide réfrigérant à haute pression
Au moins un capteur de température 76 est disposé sur une deuxième zone de circulation 14 du fluide réfrigérant du support 10 et destinée à la circulation du fluide réfrigérant à haute pression et/ou à la circulation du fluide réfrigérant à basse pression.

L'invention n'est pas limitée aux modes de réalisation présentés et d'autres modes de réalisation apparaîtront clairement à l'homme du métier. Il est notamment possible d'utiliser tout autre moyens de fixation tant qu'il s'agit des moyens de fixation réversible.

## Revendications

1. Module de gestion des fluides pour un véhicule notamment automobile comportant:
- un support (10) présentant une première face (40) et une seconde face (42), la première face (40) étant opposée à la seconde face (42), et,
- au moins un canal (60, 62; 64) pour le circuit d'un fluide réfrigérant
- dans lequel la la première face (40) du support (10) supporte au moins un premier échangeur de chaleur (54) et la seconde face (42) du support (10) supporte au moins une vanne (72-2; 72-3),
**caracterisé en ce que**
la première face (40) du support (10) supporte un deuxième échangeur de chaleur (50).

2. Module de gestion des fluides selon la revendication précédente dans lequel la première face (40) du support (10) supporte un troisième échangeur de chaleur (52).

3. Module de gestion des fluides (10) selon la revendication précédente dans lequel le deuxième échangeur de chaleur (50) est disposé entre le premier échangeur de chaleur (54) et le troisième échangeur de chaleur (52).

4. Module de gestion des fluides selon la revendication précédente dans lequel le premier échangeur de chaleur (54), le deuxième échangeur de chaleur (50) et le troisième échangeur de chaleur (52) comportent chacun une longueur et une largeur, la longueur de chacun des premier échangeur de chaleur (54), deuxième échangeur de chaleur (50 et troisième échangeur de chaleur (52) définissant une direction d'extension longitudinale respectivement (L1, L2; L3) et dans lequel les directions d'extension longitudinale (L2; L3) du deuxième échangeur de chaleur (50) et du troisième échangeur de chaleur (52) sont parallèles et dans lequel la direction d'extension longitudinal (L1) du premier échangeur de chaleur (54) est perpendiculaire aux directions d'extension longitudinale (L2; L3) du deuxième échangeur de chaleur (50) et du troisième échangeur de chaleur (52).

5. Module de gestion des fluides selon les revendications 2 à 4 dans lequel :
- le premier échangeur de chaleur (54) est disposé sur une première zone de circulation (12) du fluide réfrigérant du support (10) et destinée à la circulation du fluide réfrigérant à haute pression, et,
- le deuxième échangeur de chaleur (50) et le troisième échangeur de chaleur (52) sont disposés sur une deuxième zone de circulation (14) du fluide réfrigérant du support (10) et destinée à la circulation du fluide réfrigérant à haute pression et/ou à la circulation du fluide réfrigérant à basse pression.

6. Module de gestion des fluides selon la revendication précédente dans lequel la première zone de circulation (12) du fluide réfrigérant s'étend sensiblement selon un premier plan (P1) et la deuxième zone de circulation (14) du fluide réfrigérant s'étend sensiblement selon un deuxième plan (P2) et dans lequel le premier plan (P1) de la première zone de circulation (12) du fluide réfrigérant et le deuxième plan (P2) de la deuxième zone de circulation (14) du fluide réfrigérant sont différents.

7. Module de gestion des fluides selon la revendication précédente dans lequel la première zone de circulation (12) du fluide réfrigérant et la deuxième zone de circulation (14) du fluide réfrigérant sont reliées par un premier bord commun (16).

8. Module de gestion des fluides pour un véhicule notamment automobile selon l'une des revendications précédentes dans lequel la deuxième face (42) du support (10) comporte en outre un compresseur (20).

9. Module de gestion des fluides pour un véhicule notamment automobile selon l'une des revendications précédentes dans lequel la deuxième face (42) du support (10) comporte en outre une bouteille (56).

10. Module de gestion des fluides pour un véhicule notamment automobile selon l'une des revendications précédentes dans lequel la deuxième face (42) du support (10) comporte au moins un capteur de température (74; 76).

11. Module de gestion des fluides pour un véhicule notamment automobile selon la revendication précédentedans lequel la vanne (72-2; 72-3) et le capteur de température (74; 76) présentent des directions d'extensions longitudinales parallèles.

12. Module de gestion des fluides selon les revendications 10 à 11 dans lequel:
- Au moins une vanne (72-2; 72-3) est disposée sur une première zone de circulation (12) du fluide réfrigérant du support (10) et destinée à la circulation du fluide réfrigérant à haute pression
- Au moins un capteur de température (76) est disposé sur une deuxième zone de circulation (14) du fluide réfrigérant du support (10) et destinée à la circulation du fluide réfrigérant à haute pression et/ou à la circulation du fluide réfrigérant à basse pression.

13. Module de gestion des fluides selon la revendication précédente dans lequel la première zone de circulation (12) du fluide réfrigérant s'étend sensiblement selon un premier plan (P1) et la deuxième zone de circulation (14) du fluide réfrigérant s'étend sensiblement selon un deuxième plan (P2) et dans lequel le premier plan (P1) de la première zone de circulation (12) du fluide réfrigérant et le deuxième plan (P2) de la deuxième zone de circulation (14) du fluide réfrigérant sont différents.

## Patentansprüche

1. Fluidmanagementmodul für ein Fahrzeug, insbesondere ein Kraftfahrzeug, aufweisend:
• einen Träger (10) mit einer ersten Seite (40) und einer zweiten Seite (42), wobei die erste Seite (40) der zweiten Seite (42) gegenüberliegt, und
• mindestens einen Kanal (60, 62; 64) für den Kreislauf eines Kältemittelfluids,
• wobei die erste Seite (40) des Trägers (10) mindestens einen ersten Wärmetauscher (54) trägt und die zweite Seite (42) des Trägers (10) mindestens ein Ventil (72-2; 72-3) trägt, **dadurch gekennzeichnet, dass** die erste Seite (40) des Trägers (10) einen zweiten Wärmetauscher (50) trägt.

2. Fluidmanagementmodul nach dem vorhergehenden Anspruch, wobei die erste Seite (40) des Trägers (10) einen dritten Wärmetauscher (52) trägt.

3. Fluidmanagementmodul (10) nach dem vorhergehenden Anspruch, wobei der zweite Wärmetauscher (50) zwischen dem ersten Wärmetauscher (54) und dem dritten Wärmetauscher (52) angeordnet ist.

4. Fluidmanagementmodul nach dem vorhergehenden Anspruch, wobei der erste Wärmetauscher (54), der zweite Wärmetauscher (50) und der dritte Wärmetauscher (52) jeweils eine Länge und eine Breite aufweisen, wobei die Länge jedes des ersten Wärmetauschers (54), zweiten Wärmetauschers (50) und dritten Wärmetauschers (52) jeweils eine Längserstreckungsrichtung (L1, L2; L3) definiert, und wobei die Längserstreckungsrichtungen (L2; L3) des zweiten Wärmetauschers (50) und des dritten Wärmetauschers (52) parallel sind, und wobei die Längserstreckungsrichtung (L1) des ersten Wärmetauschers (54) senkrecht zu den Längserstreckungsrichtungen (L2; L3) des zweiten Wärmetauschers (50) und des dritten Wärmetauschers (52) verläuft.

5. Fluidmanagementmodul nach den Ansprüchen 2 bis 4, wobei:
• der erste Wärmetauscher (54) auf einer ersten Zirkulationszone (12) des Kältemittelfluids des Trägers (10) angeordnet und für die Zirkulation des Hochdruck-Kältemittelfluids bestimmt ist, und
• der zweite Wärmetauscher (50) und der dritte Wärmetauscher (52) auf einer zweiten Zirkulationszone (14) des Kältemittelfluids des Trägers (10) angeordnet und für die Zirkulation des Hochdruck-Kältemittelfluids und/oder für die Zirkulation des Niederdruck-Kältemittelfluids bestimmt sind.

6. Fluidmanagementmodul nach dem vorhergehenden Anspruch, wobei sich die erste Zirkulationszone (12) des Kältemittelfluids im Wesentlichen entlang einer ersten Ebene (P1) erstreckt und sich die zweite Zirkulationszone (14) des Kältemittelfluids im Wesentlichen entlang einer zweiten Ebene (P2) erstreckt, und wobei die erste Ebene (P1) der ersten Zirkulationszone (12) des Kältemittelfluids und die zweite Ebene (P2) der zweiten Zirkulationszone (14) des Kältemittelfluids unterschiedlich sind.

7. Fluidmanagementmodul nach dem vorhergehenden Anspruch, wobei die erste Zirkulationszone (12) des Kältemittelfluids und die zweite Zirkulationszone (14) des Kältemittelfluids durch einen ersten gemeinsamen Rand (16) verbunden sind.

8. Fluidmanagementmodul für ein Fahrzeug, insbesondere ein Kraftfahrzeug, nach einem der vorhergehenden Ansprüche, wobei die zweite Seite (42) des Trägers (10) ferner einen Kompressor (20) aufweist.

9. Fluidmanagementmodul für ein Fahrzeug, insbesondere ein Kraftfahrzeug, nach einem der vorhergehenden Ansprüche, wobei die zweite Seite (42) des Trägers (10) ferner eine Flasche (56) aufweist.

10. Fluidmanagementmodul für ein Fahrzeug, insbesondere ein Kraftfahrzeug, nach einem der vorhergehenden Ansprüche, wobei die zweite Seite (42) des Trägers (10) mindestens einen Temperatursensor (74; 76) aufweist.

11. Fluidmanagementmodul für ein Fahrzeug, insbesondere ein Kraftfahrzeug, nach dem vorhergehenden Anspruch, wobei das Ventil (72-2; 72-3) und der Temperatursensor (74; 76) parallele Längserstreckungsrichtungen aufweisen.

12. Fluidmanagementmodul nach den Ansprüchen 10 bis 11, wobei:
• Mindestens ein Ventil (72-2; 72-3) auf einer ersten Zirkulationszone (12) des Kältemittelfluids des Trägers (10) angeordnet und für die Zirkulation des Hochdruck-Kältemittelfluids bestimmt ist.
• Mindestens ein Temperatursensor (76) auf einer zweiten Zirkulationszone (14) des Kältemittelfluids des Trägers (10) angeordnet und für die Zirkulation des Hochdruck-Kältemittelfluids und/oder für die Zirkulation des Niederdruck-Kältemittelfluids bestimmt ist.

13. Fluidmanagementmodul nach dem vorhergehenden Anspruch, wobei sich die erste Zirkulationszone (12) des Kältemittelfluids im Wesentlichen entlang einer ersten Ebene (P1) erstreckt und sich die zweite Zirkulationszone (14) des Kältemittelfluids im Wesentlichen entlang einer zweiten Ebene (P2) erstreckt, und wobei die erste Ebene (P1) der ersten Zirkulationszone (12) des Kältemittelfluids und die zweite Ebene (P2) der zweiten Zirkulationszone (14) des Kältemittelfluids unterschiedlich sind.

## Claims

1. A fluid management module for a vehicle, in particular a motor vehicle, comprising:
• a support (10) having a first face (40) and a second face (42), the first face (40) being opposite the second face (42), and,
• at least one channel (60, 62; 64) for the circuit of a refrigerant fluid,
• wherein the first face (40) of the support (10) supports at least one first heat exchanger (54) and the second face (42) of the support (10) supports at least one valve (72-2; 72-3), **characterized in that** the first face (40) of the support (10) supports a second heat exchanger (50).

2. The fluid management module according to the preceding claim, wherein the first face (40) of the support (10) supports a third heat exchanger (52).

3. The fluid management module (10) according to the preceding claim, wherein the second heat exchanger (50) is disposed between the first heat exchanger (54) and the third heat exchanger (52).

4. The fluid management module according to the preceding claim, wherein the first heat exchanger (54), the second heat exchanger (50), and the third heat exchanger (52) each have a length and a width, the length of each of the first heat exchanger (54), second heat exchanger (50), and third heat exchanger (52) respectively defining a longitudinal extension direction (L1, L2; L3), and wherein the longitudinal extension directions (L2; L3) of the second heat exchanger (50) and the third heat exchanger (52) are parallel, and wherein the longitudinal extension direction (L1) of the first heat exchanger (54) is perpendicular to the longitudinal extension directions (L2; L3) of the second heat exchanger (50) and the third heat exchanger (52).

5. The fluid management module according to claims 2 to 4, wherein:
• the first heat exchanger (54) is disposed on a first circulation zone (12) of the refrigerant fluid of the support (10) and intended for the circulation of the high-pressure refrigerant fluid, and,
• the second heat exchanger (50) and the third heat exchanger (52) are disposed on a second circulation zone (14) of the refrigerant fluid of the support (10) and intended for the circulation of the high-pressure refrigerant fluid and/or for the circulation of the low-pressure refrigerant fluid.

6. The fluid management module according to the preceding claim, wherein the first circulation zone (12) of the refrigerant fluid extends substantially along a first plane (P1) and the second circulation zone (14) of the refrigerant fluid extends substantially along a second plane (P2), and wherein the first plane (P1) of the first circulation zone (12) of the refrigerant fluid and the second plane (P2) of the second circulation zone (14) of the refrigerant fluid are different.

7. The fluid management module according to the preceding claim, wherein the first circulation zone (12) of the refrigerant fluid and the second circulation zone (14) of the refrigerant fluid are connected by a first common edge (16).

8. The fluid management module for a vehicle, in particular a motor vehicle, according to one of the preceding claims, wherein the second face (42) of the support (10) further comprises a compressor (20).

9. The fluid management module for a vehicle, in particular a motor vehicle, according to one of the preceding claims, wherein the second face (42) of the support (10) further comprises a bottle (56).

10. The fluid management module for a vehicle, in particular a motor vehicle, according to one of the preceding claims, wherein the second face (42) of the support (10) comprises at least one temperature sensor (74; 76).

11. The fluid management module for a vehicle, in particular a motor vehicle, according to the preceding claim, wherein the valve (72-2; 72-3) and the temperature sensor (74; 76) have parallel longitudinal extension directions.

12. The fluid management module according to claims 10 to 11, wherein:
• At least one valve (72-2; 72-3) is disposed on a first circulation zone (12) of the refrigerant fluid of the support (10) and intended for the circulation of the high-pressure refrigerant fluid.
• At least one temperature sensor (76) is disposed on a second circulation zone (14) of the refrigerant fluid of the support (10) and intended for the circulation of the high-pressure refrigerant fluid and/or for the circulation of the low-pressure refrigerant fluid.

13. The fluid management module according to the preceding claim, wherein the first circulation zone (12) of the refrigerant fluid extends substantially along a first plane (P1) and the second circulation zone (14) of the refrigerant fluid extends substantially along a second plane (P2), and wherein the first plane (P1) of the first circulation zone (12) of the refrigerant fluid and the second plane (P2) of the second circulation zone (14) of the refrigerant fluid are different.
